# EUROPEAN PATENT SPECIFICATION

(11) **EP 3 838 457 B1**
(45) Date of publication and mention of the grant of the patent: **31.07.2024**
(21) Application number: 20211778.4
(22) Date of filing: 04.12.2020
(51) Int. Cl.: B23B 31/08, B23B 31/00, B23D 77/02, B23D 77/00, B23Q 11/10

(54) **TOOL UNIT FOR REAMING VERY PRECISE HOLES**
WERKZEUGEINHEIT ZUM ERWEITERUNGSBOHREN SEHR PRÄZISER LÖCHER
UNITÉ D'OUTIL POUR ALÉSER DES TROUS TRÈS PRÉCIS

(30) Priority: 13.12.2019 CZ 20190773
(43) Date of publication of application: 23.06.2021
(73) Proprietor: FINAL Tools a.s., 627 00 Brno (CZ)
(72) Inventor: FIALA, Stanislav, 62800 Brno (CZ)
(74) Representative: Malusek, Jiri

(56) References cited:
- DE-B3- 102013 203 297
- JP-A- H03 117 533
- US-A- 2 813 723

## Description

### Technical field

The invention deals with a new design of a tool unit for CNC machines, containing a working tool and a clamping body, designed for reaming of very precise holes, especially from 3 to 32 mm in diameter and depths up to 120 mm from accuracy level IT5, which allows swinging floating movement of the working tool in radial degree of freedom, in the order of thousandths of mm.

### State of the art

Currently known tools and machining concepts applied on modern automated CNC machines do not guarantee in many cases reproducible accuracy of workpiece production, in which it is required to machine very precise holes with the accuracy level IT5 - IT6 especially from Ø 3 to 32 mm, depth up to 120 mm, surface quality from Ra = 0.6µm, with high shape and position accuracy, especially in hydraulic components of the aerospace and automotive industry.

All this leads in some cases to large production losses due to downtime of very expensive multifunctional robotic machines and also to a large proportion of scrap.

In order to achieve the required accuracies, in some cases, due to the above-mentioned problems, the machining of holes must be completed in an abrasive manner, i.e. for instance by honing or grinding at other workplaces at the expense of several times higher production costs.

One of the major influences on these problems is that the tool units consist of a replaceable work tool and a clamping tool, which is a connecting member for connecting the work tool to the spindle of the machine tool.

In particular, it concerns clamping tools for axial tools with a cylindrical shank, which must meet the following basic requirements:
- Sufficient torque transfer from machine to tool
- Reliable reproducibility of high-precision tool centering relative to the machine spindle axis of rotation
- Sufficient pivoting flexibility and rigidity of the clamped work tool in the machine spindle
   - Sufficient supply of working fluid to the cutting part of the working tool
   - Sufficient static and dynamic balance of the tool unit
   - High service life of clamping tools

Currently are used clamping tools for work tools with a cylindrical clamping shank and their advantages and disadvantages are as follows:
Weldon and Whistle-Notch clamping tools:
These are the simplest and therefore most affordable clamping tools. They are used to clamping tools with a cylindrical shank provided with a corresponding side surface. Weldon clamping tools use for clamping one or two screws perpendicular to the tool axis, Whistle-Notch clamping tools use one or two screws inclined by 2°. In order to suppress the eccentricity due to the unilateral action of the clamping force, the inner diameter of the clamping tool is ground with accuracy level H4 and at the same time the use of tools with a precision shank h6 is required. However, the disadvantage of these simple mechanical clamping tools is the relative value of the imbalance. Nonuniform weight distribution is due to the principle of clamping with a radial screw. The radial screw, in turn, preferably keeps the tool in the correct position and prevents the tool from being pulled out of the clamping tool or slipped into it.

### Collet chucks

Collet chucks belong to the group of clamping tools based on the mechanical principle of clamping of the tool. The principle of collet chucks consists in pushing the collet (replaceable insert) into the conical cavity of the chuck by means of a cap nut. The collet chuck is provided with notches around the circumference, which allow small elastic deformation and thus clamping of the tool. During the long-term use of collet chucks, their maximum technical perfection has been achieved. Nevertheless, today they are often replaced by other clamping methods due to lower clamping force and worse values of axial and radial runout. The clamping range of each insert is 0.5 to 1 mm. It is therefore necessary to prepare collets of the required diameters for the clamping tool, or a whole set of collets (e.g. 2-25 mm). The advantage is the possibility of clamping any diameters (within the range), i.e. cheaper tools. The disadvantage is the very unreliable reproducibility of the exact centering of the tool when it is replaced in the clamping tool.

### Hydraulic clamping tools

These clamping tools work on principle of deformation of the thin inner wall of the clamping cavity by the pressure of hydraulic medium. Hydraulic clamping tools can be divided into two groups. They are divided according to the method of activation the clamping force.

Disadvantages - relatively short service life of the hydraulic mechanism, which results in high production costs, especially for large-scale production.

### Thermal clamping tools

Thermal clamping sleeves are made of special materials and work on principle of thermal expansion of the material. Heating of the clamping sleeve allows the tool to be inserted and after cooling a very perfect and rigid clamping is achieved. To remove the tool, the chuck must be reheated. For heating it is necessary to use special devices usually operating on principle of induction heating and also fast air cooling is necessary. The heating of the clamping sleeve to a temperature of around 250°- 350° C is in the order of a few seconds. At this temperature, there are no structural changes in the material and it is important that it is not heated to a higher temperature. At temperatures around 500° C, tempering can occur and the housing material loses its mechanical properties and the thermal clamping tool can no longer perform its function.

The biggest advantage of thermal clamping tools is the minimal dimensions of the clamping system, which allows the construction of very slim clamping tools for deep milling. High demands are again made on tool shanks - selected diameters and high accuracy. For clamping it is necessary to use special devices with hot-air or inductive heating and fast air cooling. Tools with a side face can also be clamped into thermal clamping tools, and when used correctly, the manufacturers declare that the thermal sleeves can manage more than 5,000 clamping cycles. The disadvantage is the need for additional equipment for clamping and unclamping the tool, and also from the point of view of work safety it is not ideal that there are components with high temperature in production process.

The main disadvantage of all known tool units is that they do not provide radial and swinging flexibility of the clamped reaming tool, especially with a short overhang of its cutting part, which in many cases causes dimensional and shape inaccuracies of the reamed holes.

In JP H03 117533 A, *a shank of a reaming tool is placed into a chuck holder and the front surface of the shank is provided with a tube extension for entering of the coolant into the central cooling channel of the shank leading to the reamer. To secure the inlet of the coolant into tube extention and to the reamer without leakage the outer front surface of the chucking holder is provided with a O-ring which is pressed against the chucking holder by a O-ring retainer which is pressed by a spring which is placed in a hollow in the main conical clamping body. This construction only secures effective flow of the coolant.*

The aim of the invention is to achieve a defined flexibility, rigidity and positional accuracy of the clamped reaming tool by means of a tool unit, which is designed especially for reaming of very precise holes in the diameter range of 3 - 32 mm at cutting speeds up to 250 m/min. on modern fully automated machining centers.

### Summary of the invention

The above mentioned deficiencies are eliminated by the tool unit for reaming very precise holes according to claim 1.

In a preferred embodiment the flexible element is formed by disc springs, helical spring or resilient mass.

In another preferred embodiment the outer diameter of the drive element corresponds to the inner diameter of the clamping nut screwed onto the clamping body.

In another preferred embodiment the working tool is made of structural steel, preferably with a tensile strength of 900-1000 MPa, with a soldered monolithic cutting part made of sintered carbide or cermet provided with an abrasion-resistant coating.

In another preferred embodiment the working tool is made of structural steel, including tooth grooves, in the cutting part of which cutting tips made of cubic boron nitride or diamond polycrystal are soldered.

In another preferred embodiment the cylindrical shank of the working tool is made of structural steel, in the center of shank is a permanently pressed on sintered carbide cylinder, at the outer end of which a cutting part is created and continuous channels are provided on the surface of the cylinder for supply of cooling medium from the central channel to the cutting part.

### Brief description of the drawings

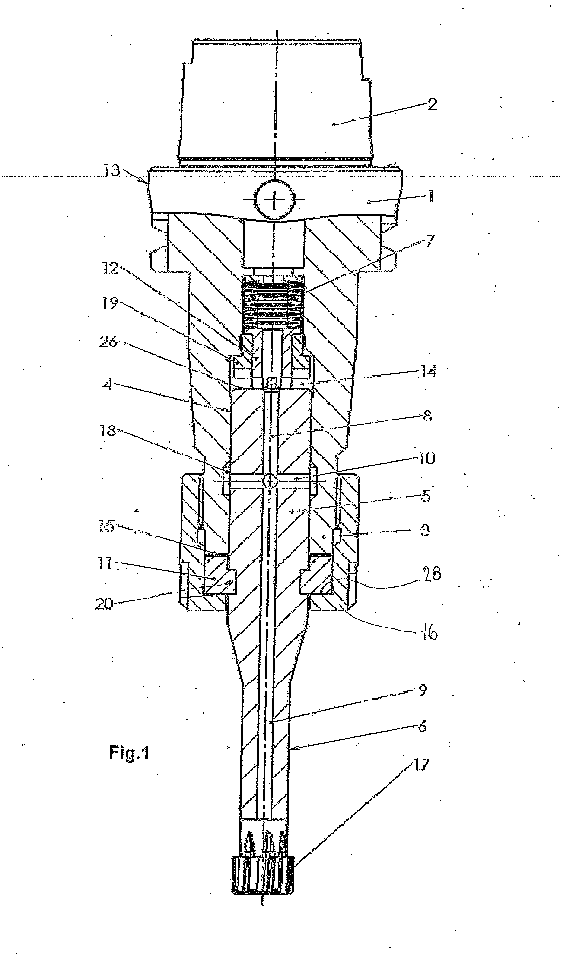

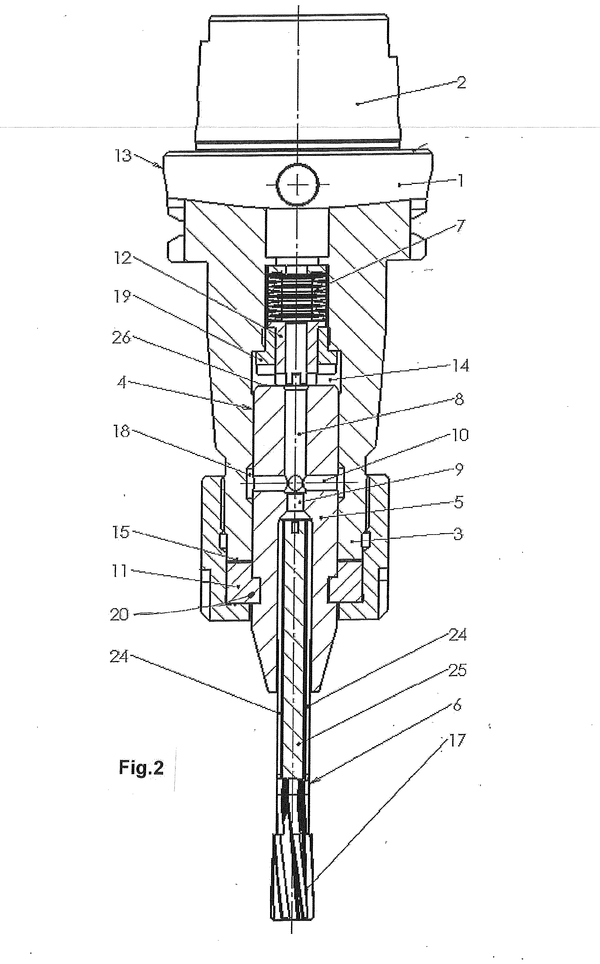

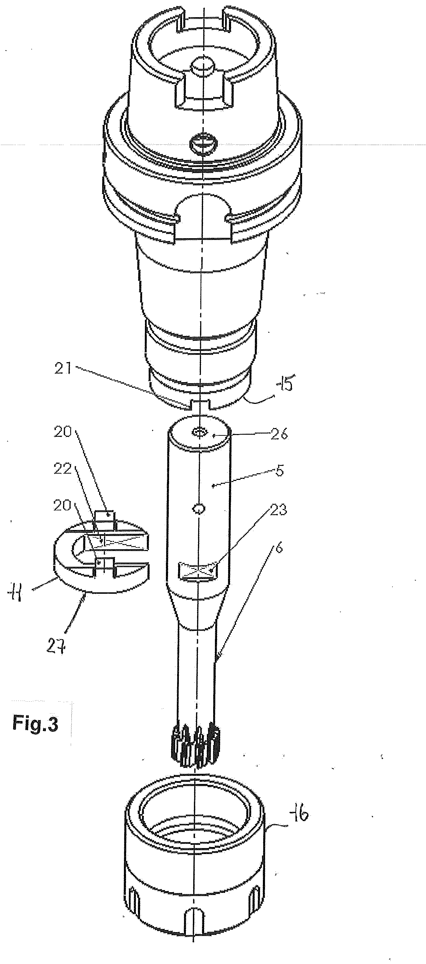

The invention will be further described using drawings, where Fig. 1 shows a tool unit according to the invention intended for reaming blind holes, Fig. 2 shows a tool unit according to the invention intended for reaming through holes, and Fig. 3 is a tool unit according to Figs. 1 and 2 in an exploded view.

### Detailed description of the invention

The tool unit 13 concerns tool clamping for machining high-precision holes in the accuracy level IT5 on high-precision CNC machines with tool rotation, at a cutting speed of up to 250 m/min.

It is obvious from the exemplary embodiment of the tool unit 13 according to Figs. 1 to 3 that it consists of a clamping body 1, at the upper end of which a conical part 2 is formed for mounting into a machine tool spindle (not shown). The clamping body 1 is provided with a cylindrical clamping cavity 4 and its face 15 is adapted for driving connection to a cylindrical shank 5 of a reaming tool 6 by means of a horseshoe-shaped drive element 11 with arms 27 which engage by the front projections 20 with the transverse groove 21. It can be seen in detail in Fig. 3, wherein the transverse groove 21 is created on the face 15 of the clamping body 1.

As can again be clearly seen in Fig. 3 an inner recess 22 is provided on the drive element 11, by means of which the two arms 27 are formed and through which the drive element 11 is deposited in two opposite transverse grooves 23 formed on the cylindrical shank 5 of the reaming tool 6. Furthermore, the upper part 14 of the clamping cylindrical cavity 4 is adapted to freely accommodate the cylindrical clamping shank 5 of the reaming tool 6. In the upper part 14 of the clamping cylindrical cavity 4 a pre-loaded distance pin 12 is adapted for engagement with the front of the cylindrical shank 5 of the reaming tool 6, the distance pin 12 is secured by the cap nut 19 and is partialy pre-loaded with the flexible element 7, which are disc springs which define the axial play of the reaming tool 6.

The working tool 6 is preferably made of structural steel, preferably with a tensile strength of 900-1000 MPa, with a soldered monolithic cutting part made of sintered carbide or cermet, provided with an abrasion-resistant coating.
In the assembled state of the tool unit 13, the drive element 11 is firmly pressed against the face 15 of the clamping body 1, whereby by means of tightening of the clamping nut 16, whose inner face 28 abuts the lower part of the drive element 11 and the arms 27 of which are inserted into the transverse grooves 23, the face 26 of the clamping shank 5 engages with the face of the distance pin 12, so by firm tightening of the clamping nut 16 the flexible element 7 is compressed by a force of 400-800 N.
Further axial compression of the flexible element 7, in this embodiment made as disc springs, takes place by means of the clamping nut 16, which rests frontally against the drive element 11 extending into transverse grooves 23 formed on the cylindrical shank 5 of the working tool 6.

In the longitudinal direction, a main channel 8 for guiding the cooling medium at a pressure of 40-100 bar is formed in the axis of the clamping shank 5 of the reaming tool 6, from which the pressurized cooling medium is distributed to the central channel 9, which mouths in the cutting part 17 of the tool 6 and the pressurized cooling medium is further distributed from the main channel 8 to the transverse channels 10, which mouth into the annular cavity 18 and further into the cylindrical cavity 4, whereby due to the action of the uniform overpressure of the cooling medium in the cylindrical cavity 4 of the clamping body 1, the axis of the clamping cylindrical shank 5 of the working tool 6 will be set without play into the ideal axis with the axis of the cylindrical clamping cavity 4.

The drive element 11 has an outer diameter corresponding to the inner diameter of the clamping nut 16.

Fig. 2 shows an embodiment where the cylindrical shank 5 of the working tool 6 is made of structural steel, in the center of clamping shank 5 there is a permanently pressed on sintered carbide cylinder 25, at the outer end of which a cutting part 17 is created and continuous channels 24 are provided on the cylinder surface for supply of cooling medium from the central channel 9 to the cutting part 17.

The present invention is characterized in that the tool unit consists of a clamping body with a very precise concentric cylindrical hole, in which the cylindrical clamping part of the working tool with a radial play of 5-10 µm is arranged. The working tool is rotatably connected to the clamping body by means of a drive element which rotatably connects the body to the clamping part of the reamer and axially secures its position with a defined force axial spring loading. The design of the tool unit allows the swinging (floating) movement of the clamping part of the working tool in radial degree of freedom in the order of thousandths of millimeter during reaming, thus setting the cutting part of the reaming tool into the so-called ideal reaming axis, i.e. when all cutting edges remove the same chip. The overpressure of the cooling medium is used for this purpose, and the process fluid inlet pressure of the cooling medium must be at least 40 bar.

Advantages of the new solution compared to known technical solutions:
- The arrangement of the reaming unit is solved as ergonomically and user-friendly as possible with regard to the simplicity and speed of clamping the reaming tool
- High service life of clamping tool
- Higher operational reliability
- Higher accuracy of reamed holes
- Higher cutting tip durability

### List of reference signs

- 1: clamping body
- 2: conical part of clamping body
- 3: lower part of the body
- 4: cylindrical cavity
- 5: cylindrical shank
- 6: working tool
- 7: flexible element
- 8: main channel
- 9: central channel
- 10: transverse channel
- 11: drive element
- 12: distance pin
- 13: tool unit
- 14: upper part of the clamping cavity
- 15: face of the clamping body
- 16: clamping nut
- 17: cutting part
- 18: annular cavities
- 19: cap nut
- 20: projections
- 21: transverse groove
- 22: inner recess
- 23: tranverse groove
- 24: continuous channels
- 25: sintered carbide cylinder
- 26: clamping shank face
- 27: drive element arms
- 28: inner face of the clamping nut

## Claims

1. Tool unit (13) for reaming of very precise holes comprising a clamping body (1) provided with a clamping cylindrical cavity (4), into which a clamping shank (5) of a reaming tool (6) is fixed, a main cooling medium channel (8) passing through the shank (5), **characterized in that** two opposite transverse grooves (23) are provided on the clamping shank (5) of the reaming tool (6), into which the arms (27) of a horseshoe-shaped drive element (11) with an inner central recess (22) are inserted wherein a transverse groove (21) is provided on the lower face (15) of the clamping body (1) into which front projections (20) created on the upper surface of the drive element (11) fit, wherein a clamping nut (16) screwed onto the clamping body (1) abuts the lower face of the drive element (11), wherein in the upper part (14) of the clamping cylindrical cavity (4) a spring-loaded distance pin (12) secured by a cap nut (19) rests on the face (26) of the cylindrical shank (5) of the reaming tool (6), above which a flexible element (7) is arranged delimiting the axial play of the reaming tool (6), the upper side of the flexible element (7) resting against the shoulder in the cavity (4) of the clamping body (1), wherein the main channel (8) for guiding the cooling medium is arranged for a pressure of 40-100 bar, the cooling pressure medium being able to be distributed from the main coolant channel (8) to the continuing central channel (9), which discharges in the-cutting part (17) of the reaming tool (6) and into a transverse channel (10), which discharges into an annular cavity (18) formed between the clamping shank (5) and the cavity (4) of the clamping body (1), from which annular cavity (18) the cooling pressure medium can flow into the cylindrical cavity (4).

2. Tool unit according to claim 1, **characterized in that** the flexible element (7) is formed by disc springs, helical spring or resilient mass.

3. Tool unit according to claim 1, **characterized in that** the outer diameter of the drive element (11) corresponds to the inner diameter of the clamping nut (16) screwed onto the clamping body (1).

4. Tool unit according to claim 1, **characterized in that** the working tool (6) is made of structural steel, preferably with a tensile strength of 900-1000 MPa, with a soldered monolithic cutting part made of sintered carbide or cermet provided with an abrasion-resistant coating.

5. Tool unit according to claim 1, **characterized in that** the working tool (6) is made of structural steel, including tooth grooves, in the cutting part (17) of which cutting tips made of cubic boron nitride or diamond polycrystal are soldered.

6. Tool unit according to claim 1, **characterized in that** the cylindrical shank (5) of the working tool (6) is made of structural steel, in the center of shank (5) is a permanently pressed on sintered carbide cylinder (25), at the outer end of which a cutting part (17) is created and continuous channels (24) are provided on the surface of the cylinder (25) for supply of cooling medium from the central channel (9) to the cutting part (17).

## Patentansprüche

1. Werkzeugeinheit zum Erweiterungsbohren sehr präzizer Löchern mit einem Spannkörper, der mit einem zylindrischen Spannhohlraum zur Befestigung eines Werkzeugschaftes versehen ist, wobei der Schaft von einem Hauptkanal für Kühlmittel durchsetzt ist, **dadurch gekennzeichnet, dass** am Spannschaft (5) des Werkzeuges (6) zwei gegenüberliegende Quernuten (23) angebracht sind, in die die Arme (27) des hufeisenförmigen Halteelements (11), das durch die innere zentrale Aussparung (22) gebildet wird, mit ihren Seitenflächen eingeführt werden, während eine Quernut (21) in der unteren Fläche (15) des Klemmkörpers (1) ausgebildet ist, in die die an der Oberseite des Halteelements (11) ausgebildeten stirnseitigen Vorsprünge (20) eingreifen, wobei eine auf den Klemmkörper (1) aufgeschraubte Spannmutter (16) bis zur Unterseite des Halteelements (11) reicht, wobei am oberen Ende (14) des klemmzylindrischen Hohlraums (4) ein federbelasteter, durch eine Überlaufmutter (19) gesicherter Aufnahmezapfen (12) angeordnet ist, über dem ein das axiale Spiel des Reibwerkzeugs (6) definierendes flexibles Element (7) angeordnet ist, das von oben auf einem Sitz im Hohlraum des Klemmkörpers (1) aufliegt (26), wobei ein Hauptkanal (8) zur Führung des Kühlmediums für einen Druck von 40-100 bar angeordnet ist, von dem aus das Kühlmedium zu einem stromabwärts gelegenen Zentralkanal (9), der im Schneidteil (17) des Werkzeugs (6) mündet, und weiter zu einem Querkanal (10), der im Zwischenhohlraum (18) zwischen dem Schaft (5) und dem Hohlraum (4) des Spannkörpers (1) mündet, und von dort zum zylindrischen Hohlraum (4) verteilt wird.

2. Werkzeugeinheit nach Anspruch 1, **dadurch gekennzeichnet, dass** das federnde Element (7) eine Tellerfeder, eine Schraubenfeder oder eine federnde Masse umfasst.

3. Werkzeugeinheit nach Anspruch 1, **dadurch gekennzeichnet, dass** der Außendurchmesser des Spannelementes (11) dem Innendurchmesser der auf den Spannkörper (1) geschraubten Spannmutter (16) entspricht.

4. Werkzeugeinheit nach Anspruch 1, **dadurch gekennzeichnet, dass** das Arbeitswerkzeug (6) aus Baustahl, vorzugsweise mit einer Festigkeit von 900-1000 MPa, mit einem monolithischen Schneidteil aus gesintertem Hartmetall oder Cermet hergestellt und mit einer abriebfesten Beschichtung versehen ist.

5. Werkzeugeinheit nach Anspruch 1, **dadurch gekennzeichnet, dass** das Arbeitswerkzeug (6) aus Baustahl mit Zahnnuten gebildet ist, in die Schneidabschnitte (17) aus kubischem Bornitrid oder polykristallinem Diamant eingelötet sind.

6. Werkzeugeinheit nach Anspruch 1, **dadurch gekennzeichnet, dass** der zylindrische Schaft (5) des Arbeitswerkzeugs (6) aus Baustahl gebildet ist, in dessen Zentrum eine Rolle (25) aus gesintertem Hartmetall untrennbar eingepresst ist, an deren äußerem Ende ein Schneidteil (17) ausgebildet ist und auf der Oberfläche der Rolle (25) durchgehende Kanäle (24) zur Zuführung von Kühlmedium vom zentralen Kanal (8) zum Schneidteil (17) ausgebildet sind.

## Revendications

1. Unité d'outils pour 'aléser des trous très précis comprenant un corps de serrage pourvu d'une cavité cylindrique de serrage pour fixer une tige d'outil, dans laquelle un canal principal pour le liquide de refroidissement passe à travers la tige, **caractérisée en ce que** deux rainures transversales opposées (23) sont réalisées sur la tige de serrage (5) de l'outil (6), dans lesquelles les bras (27) de l'élément de retenue en forme de fer à cheval (11) formé par la cavité centrale intérieure (22) sont insérés par leurs faces latérales, tandis qu'une rainure transversale (21) est pratiquée dans la face inférieure (15) du corps de serrage (1), dans laquelle s'insèrent les saillies frontales (20) formées sur la surface supérieure de l'élément de retenue (11), avec un écrou de serrage (16) vissé sur le corps de serrage (1) s'étendant jusqu'à la surface inférieure de l'élément de retenue (11), dans lequel une goupille de positionnement à ressort (12), fixée par un écrou de dépassement (19), est disposée au sommet (14) de la cavité cylindrique de serrage (4), sur laquelle est disposé un élément flexible (7) définissant le jeu axial de l'outil d'alésage (6), reposant par le haut sur un siège dans la cavité du corps de serrage (1) (26), dans lequel un canal principal (8) pour conduire le fluide de refroidissement est disposé pour une pression de 40-100 bars, et à partir duquel le fluide de refroidissement est distribué à un canal central en aval (9) qui émerge dans la partie coupante (17) de l'outil (6) et ensuite à un canal transversal (10) qui émerge dans la cavité intermédiaire (18) entre la tige (5) et la cavité (4) du corps de serrage (1) et de là à la cavité cylindrique (4).

2. Unité d'outils selon la revendication 1, **caractérisée en ce que** l'élément élastique (7) comprend un ressort à disque, un ressort hélicoïdal ou une masse élastique.

3. Unité d'outils selon la revendication 1, **caractérisée en ce que** le diamètre extérieur de l'élément de serrage (11) correspond au diamètre intérieur de l'écrou de serrage (16) vissé sur le corps de serrage (1).

4. Unité d'outils selon la revendication 1, **caractérisée en ce que** l'outil de travail (6) est en acier de construction, de préférence d'une résistance de 900 à 1000 MPa, avec une partie coupante monolithique en carbure fritté ou en cermet et recouverte d'un revêtement résistant à l'abrasion.

5. Unité d'outils selon la revendication 1, **caractérisée en ce que** l'outil de travail (6) est formé d'acier structurel comprenant des rainures de dents dans lesquelles les parties coupantes (17) sont soudées à des plaquettes de coupe en nitrure de bore cubique ou en diamant polycristallin.

6. Unité d'outils selon la revendication 1, **caractérisée en ce que** la tige cylindrique (5) de l'outil de travail (6) est formée d'acier de construction au centre duquel un rouleau (25) en carbure fritté est pressé de manière non séparable, à l'extrémité extérieure duquel une partie coupante (17) est formée et sur la surface du rouleau (25) des canaux continus (24) sont formés pour l'alimentation en fluide de refroidissement du canal central (8) à la partie coupante (17).
